# DEMANDE DE BREVET EUROPEEN

(11) **EP 4 047 522 A1**
(43) Date de publication de la demande: **24.08.2022**
(21) Numéro de dépôt: 21158733.2
(22) Date de dépôt: 23.02.2021
(51) Int. Cl.: G06K 19/07

(54) **DISPOSITIF ANTENNAIRE ET PROCÉDÉ DE COMMUNICATION AFFÉRENT**

(71) Demandeur: The Swatch Group Research and Development Ltd, 2074 Marin (CH)
(72) Inventeur: RANDJELOVIC, Zoran, 2035 Corcelles (CH); SCORDILIS, Thierry, 2036 Cormondrèche (CH)
(74) Mandataire: ICB SA

(57) **Abrégé**

Un aspect de l'invention concerne un dispositif de radiocommunication (100), configuré pour mettre en œuvre un procédé de communication, comprend une antenne (130) pour capter au moins un ensemble d'ondes électromagnétiques (131) et/ou pour rayonner au moins un premier groupement de données (111) et/ou au moins un deuxième groupement de données (121). À cela s'ajoute au moins un premier circuit de radiocommunication (110), configuré pour recevoir ledit au moins un ensemble d'ondes électromagnétiques (131) et/ou pour émettre ledit au moins un premier groupement de données (111), et au moins un deuxième circuit de radiocommunication (120), configuré pour recevoir ledit au moins un ensemble d'ondes électromagnétiques (131) et/ou pour émettre ledit au moins un deuxième groupement de données (121).

## Description

### Domaine technique de l'invention

La présente invention concerne le domaine de la radio communication et plus particulièrement le domaine des radiocommunications courte distance du type RFID ou encore NFC. Plus précisément, la présente invention se rapporte aux dispositifs antennaires, aux combinaisons de fonctions, ainsi qu'aux procédés de communication afférents.

### Arrière-plan technologique

Les dispositifs RFID ou plus particulièrement les dispositifs NFC, acronyme anglais pour Near Field Communication, également connus sous le nom de dispositifs de communication courte distance sans contact, sont des dispositifs disposés sur ou dans des objets ou produits de sorte à permette une identification dudit objet et/ou produit par l'intermédiaire d'ondes électromagnétiques. Ces dispositifs comprennent une antenne associée à une seule puce électronique qui leur permet de recevoir et de répondre aux requêtes radio émises depuis l'émetteur-récepteur.

Les dispositifs RFID ou NFC sont de plus en plus utilisés pour effectuer des paiements, des contrôles d'accès, de la recharge etc...

Toutefois, les puces électroniques destinées aux paiements bancaires, par exemple, sont complexes, à cause des opérations sécurisées et en plus soumises à de nombreux règlements, et ne sont pas adaptées pour des applications simples et traditionnelles comme le contrôle d'accès ou à des applications nouvelles telles que le WLC, acronyme anglais signifiant WireLess Charging, qui nécessitent une plateforme ouverte et facilement accessible.

Par ailleurs, il n'est même pas possible d'utiliser une puce électronique bancaire pour d'autres applications, car aucun accès n'est accordé à sa mémoire sécurisée hormis à une communauté restreinte comme celle du milieu bancaire, par exemple.

### Résumé de l'invention

L'invention concerne un dispositif de radiocommunication courte distance comprenant une antenne configurée pour capter au moins un ensemble d'ondes électromagnétiques et/ou pour rayonner au moins un premier groupement de données et/ou au moins un deuxième groupement de données, et au moins un :
- Premier circuit de radiocommunication ; ledit au moins un premier circuit de radiocommunication étant configuré pour recevoir ledit au moins un ensemble d'ondes électromagnétiques et/ou pour émettre ledit au moins un premier groupement de données ;
- Deuxième circuit de radiocommunication ; ledit au moins un deuxième circuit de radiocommunication étant configuré pour recevoir ledit au moins un ensemble d'ondes électromagnétiques et/ou pour émettre ledit au moins un deuxième groupement de données ;
Ladite antenne étant configurée pour être connectée, de préférence directement, audit au moins un premier circuit de radio-communication et audit au moins un deuxième circuit de radio-communication.

Grâce à cette disposition, le dispositif de radiocommunication permet d'avoir deux circuits de radio-communication reliés à une antenne, de préférence à une seule antenne, ce qui permet de simplifier l'intégration dans un produit de faible encombrement, les procédés de fabrication et d'assemblage, et/ou de combiner au moins deux circuits de radiocommunication dans un seul module RFID ou NFC et par la même occasion augmenter le nombre de fonctionnalité sur un seul dispositif. Par dispositif de radiocommunication courte distance, on entend un dispositif de radiocommunication configuré pour communiquer dans un rayon de quelques centimètres à quelques mètres.

Selon un mode de réalisation, ladite au moins une première norme est identique à ladite au moins une deuxième norme.

Grâce à cette disposition, le circuit de radio-communication émet un groupement de données, de préférence simultané, vers le destinataire et c'est ledit destinataire qui sélectionnera le groupement de données approprié à sa requête.

Selon un mode de réalisation, ledit au moins un premier circuit de radiocommunication est configuré pour émettre ledit au moins un premier groupement de données selon au moins une première norme et ledit au moins un deuxième circuit de radiocommunication est configuré pour émettre ledit au moins un deuxième groupement de données selon au moins une deuxième norme, de préférence ladite au moins une première norme est différente de ladite au moins une deuxième norme.

Grâce à cette disposition, le circuit de radiocommunication n'émet un groupement de données que lorsque ledit au moins un ensemble d'ondes électromagnétiques correspond à ladite au moins une première norme et/ou à ladite au moins une deuxième norme.

Selon un mode de réalisation, ledit dispositif de radiocommunication comprend au moins un dispositif de retardement configuré pour retarder la réception et/ou l'émission dudit au moins un ensemble d'ondes électromagnétiques par ledit au moins un premier circuit de radiocommunication ou par ledit au moins un deuxième circuit de radiocommunication.

Selon un mode de réalisation, ledit dispositif de radiocommunication comprend au moins un commutateur configuré pour commuter la réception dudit au moins un ensemble d'ondes électromagnétiques entre ledit au moins un premier circuit de radiocommunication et ledit au moins un deuxième circuit de radiocommunication.

Grâce à l'une ou l'autre de ces dispositions précédentes, une priorisation ou une hiérarchisation entre ledit au moins un premier circuit de radiocommunication et par ledit au moins un deuxième circuit de radiocommunication est réalisée.

Selon un mode de réalisation, ladite antenne est constituée d'une seule antenne.

Grâce à cette disposition, le dispositif de radiocommunication permet d'avoir deux circuits de radiocommunication reliés à une seule antenne ce qui permet de simplifier les procédés de fabrication et/ou de combiner au moins deux circuits de radiocommunication dans un seul module RFID ou NFC.

Selon un mode de réalisation, ladite au moins une première norme est une norme RFID ou une norme NFC et/ou ladite au moins une deuxième norme est une norme RFID ou une norme NFC.

L'invention concerne un procédé de communication mis en œuvre par ledit dispositif de radiocommunication selon la présente invention ; ledit procédé de communication comprenant :
- Réception dudit au moins un ensemble d'ondes électromagnétiques ;
- Sélection dudit au moins un premier circuit de radiocommunication et/ou dudit au moins un deuxième circuit de radiocommunication ; et,
- Émission dudit au moins un premier groupement de données et/ou dudit au moins un deuxième groupement de données.

Grâce à cette disposition, le dispositif de radiocommunication permet d'avoir deux circuits de radiocommunication communiquant avec une antenne, de préférence une seule antenne, ce qui permet de simplifier les procédés de fabrication et/ou de combiner au moins deux circuits de radiocommunication dans une seule module RFID ou NFC.

Selon un mode de réalisation, ladite sélection est réalisée par une reconnaissance de ladite au moins une première norme par ledit au moins un premier circuit de radiocommunication et/ou de ladite au moins une deuxième norme par ledit au moins un deuxième circuit de radiocommunication.

Grâce à cette disposition, le circuit de radiocommunication n'émet un groupement de données que lorsque ledit au moins un ensemble d'ondes électromagnétiques correspond à ladite au moins une première norme et/ou à ladite au moins une deuxième norme.

Selon un mode de réalisation, ladite sélection est réalisée en retardant ladite réception dudit au moins un ensemble d'ondes électromagnétiques par ledit au moins un premier circuit de radiocommunication ou par ledit au moins un deuxième circuit de radiocommunication et/ou en retardant ladite émission dudit au moins un premier groupement de données et/ou dudit au moins un deuxième groupement de données.

Selon un mode de réalisation, ladite sélection est réalisée en commutant ladite réception dudit au moins un ensemble d'ondes électromagnétiques entre ledit au moins un premier circuit de radiocommunication et ledit au moins un deuxième circuit de radiocommunication.

Grâce à l'une ou l'autre de ces dispositions précédentes, une priorisation ou une hiérarchisation entre ledit au moins un premier circuit de radiocommunication et par ledit au moins un deuxième circuit de radiocommunication est réalisée.

### Brève description des figures

L'invention sera décrite ci-après de manière plus détaillée à l'aide des dessins annexés, donnés à titre d'exemples nullement limitatifs, dans lesquels :
- la figure 1 représente un dispositif de radiocommunication **100** selon un mode de réalisation ;
- la figure 2 illustre un dispositif de radiocommunication **100** comprenant au moins un dispositif de retardement **141** selon un mode de réalisation ; et,
- la figure 3 présente un dispositif de radiocommunication **100** comprenant au moins un commutateur **142** selon un mode de réalisation.

### Description détaillée de l'invention

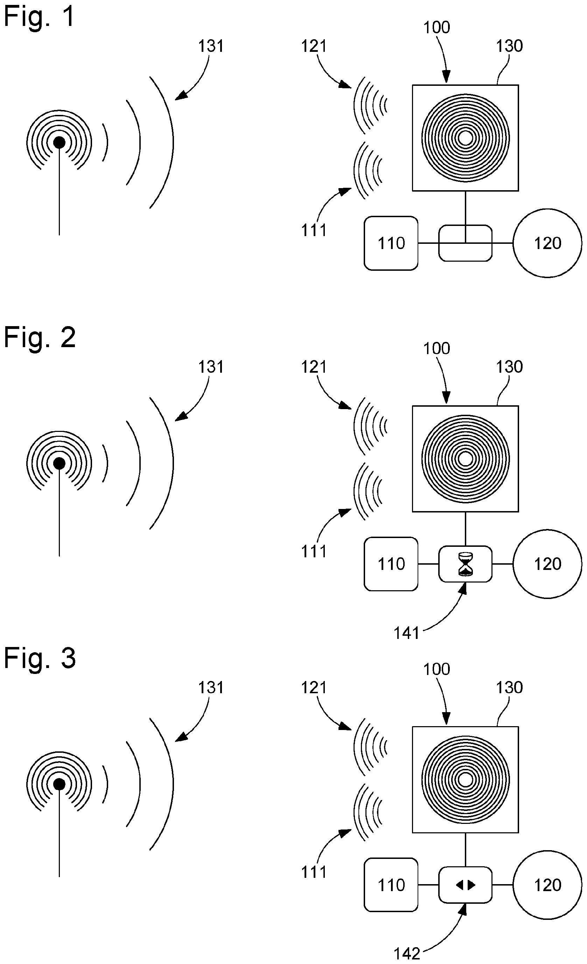

La figure 1 montre une représentation schématique d'un dispositif de radiocommunication **100** selon un mode de réalisation. Ledit dispositif de radiocommunication **100** comprend une antenne **130,** de préférence ladite antenne **130** est constituée d'une seule antenne **130,** configurée pour capter au moins un ensemble d'ondes électromagnétiques **131** et/ou pour rayonner au moins un premier groupement de données **111** et/ou au moins un deuxième groupement de données **121,** comme représenté sur les différentes figures. À cela s'ajoute au moins un premier circuit de radiocommunication **110**, configuré pour recevoir ledit au moins un ensemble d'ondes électromagnétiques **131** et/ou pour émettre ledit au moins un premier groupement de données **111,** et au moins un deuxième circuit de radiocommunication **120,** configuré pour recevoir ledit au moins un ensemble d'ondes électromagnétiques **131** et/ou pour émettre ledit au moins un deuxième groupement de données **121.** Il convient de préciser que ledit au moins un ensemble d'ondes électromagnétiques **131** peut comprendre une requête sous forme d'un groupement de données par exemple, ce à quoi, ledit au moins un premier circuit de radiocommunication **110** répond en émettant ledit au moins un premier groupement de données **111,** et/ou ledit au moins un deuxième circuit de radiocommunication **120** répond en émettant ledit au moins un deuxième groupement de données **121.**

Par ailleurs, un avantage d'avoir une antenne **130,** de préférence une seule antenne **130,** et, ledit au moins un premier circuit de radiocommunication **110** et le au moins un deuxième circuit de radiocommunication **120** est de pouvoir combiner plusieurs fonctionnalités dans ledit dispositif de radiocommunication **100**.

En effet, ledit dispositif de radiocommunication **100** met en œuvre un procédé de communication qui permet la réception dudit au moins un ensemble d'ondes électromagnétiques **131,** la sélection dudit au moins un premier circuit de radiocommunication **110** et/ou dudit au moins un deuxième circuit de radiocommunication **120** ; et l'émission dudit au moins un premier groupement de données **111** et/ou dudit au moins un deuxième groupement de données **121.**

Dans le mode de réalisation de la figure 1, ladite antenne **130** peut être connectée, de préférence directement, audit au moins un premier circuit de radiocommunication **110** et audit au moins un deuxième circuit de radiocommunication **120.**

En effet, ledit au moins un premier circuit de radiocommunication **110** et ledit au moins un deuxième circuit de radiocommunication **120** peuvent partager ladite antenne **130.** Ainsi, ledit dispositif de radiocommunication **100** peut permettre d'avoir au moins deux circuits de radiocommunication **110**, **120** reliés à une antenne, de préférence à une seule antenne, ce qui permet de simplifier les procédés de fabrication et/ou de combiner au moins deux circuits de radiocommunication **110, 120** dans un seul module RFID ou NFC.

Toujours sur la figure 1, ledit au moins un premier circuit de radiocommunication **110** peut émettre ledit au moins un premier groupement de données **111** selon au moins une première norme et ledit au moins un deuxième circuit de radiocommunication **120** peut émettre ledit au moins un deuxième groupement de données **121** selon au moins une deuxième norme. Ainsi, le circuit de radiocommunication **110, 120** n'émet un groupement de données **111, 121** que lorsque ledit au moins un ensemble d'ondes électromagnétiques **131** correspond à ladite au moins une première norme et/ou à ladite au moins une deuxième norme. Par exemple, ladite au moins une première norme peut être de type ISO15693 et ladite au moins une deuxième norme peut être de type ISO14443. Il est également possible que ladite au moins une première norme soit une norme RFID ou une norme NFC et/ou ladite au moins une deuxième norme soit une norme RFID ou une norme NFC par exemple.

Il se peut également que lesdites au moins une première norme et au moins une deuxième norme soient identiques, et répondent de manière plus ou moins simultanée par exemple. Dans ce cas, le destinataire dudit au moins un premier groupement de données **111** et/ou dudit au moins un deuxième groupement de données **121** sélectionnera le groupement de données correspondant à sa requête. Par exemple, ledit au moins un premier circuit de radiocommunication **110** peut donner accès à certaines parties d'un bâtiment et ledit au moins un deuxième circuit de radiocommunication **120** peut servir de moyen de payement au sein d'une entreprise. Ainsi, lorsque ladite antenne **130** capte ledit au moins un ensemble d'ondes électromagnétiques **131,** ledit au moins un premier circuit de radiocommunication **110** et ledit au moins un deuxième circuit de radiocommunication **120** peuvent répondre à cette requête, et seul le destinataire sélectionnera le groupement de données répondant correctement à sa requête parmi ledit au moins un premier groupement de données **111** et/ou ledit au moins un deuxième groupement de données **121.**

Dans le cas où les deux normes sont différentes, ladite sélection, mentionnée précédemment, est réalisée par une reconnaissance de ladite au moins une première norme par ledit au moins un premier circuit de radiocommunication **110** et/ou de ladite au moins une deuxième norme par ledit au moins un deuxième circuit de radiocommunication **120.** Ainsi, le dispositif de radiocommunication **100** fonctionne en utilisant deux normes différentes ce qui évite une obstruction par un circuit de radiocommunication **110**, **120,** que cela soit ledit au moins un premier circuit de radiocommunication **110** ou ledit au moins un deuxième circuit de radiocommunication **120,** puisque chaque circuit de radiocommunication **110, 120** ne reconnait que des interrogations et des commandes qui correspondent à sa norme spécifique par exemple.

Dans le mode de réalisation de la figure 2, ledit dispositif de radiocommunication **100** comprend au moins un dispositif de retardement **141** configuré pour retarder la réception dudit au moins un ensemble d'ondes électromagnétiques **131** par ledit au moins un premier circuit de radiocommunication **110** ou par ledit au moins un deuxième circuit de radiocommunication **120.** Ledit dispositif de retardement peut prendre la forme d'une ligne de code, par exemple, comme une boucle, de sorte que ladite sélection soit réalisée en retardant ladite réception dudit au moins un ensemble d'ondes électromagnétiques **131** par ledit au moins un premier circuit de radiocommunication **110** ou par ledit au moins un deuxième circuit de radiocommunication **120.** Ledit au moins un dispositif de retardement **141** peut également permettre de retarder ledit au moins un premier circuit de radiocommunication **110** ou ledit au moins un deuxième circuit de radiocommunication **120,** lorsque ladite au moins une première norme est identique à ladite au moins une deuxième norme par exemple, ce qui permettra une meilleure sélection au destinataire.

Il est également possible de d'envisager que ladite sélection soit réalisée en retardant ladite émission dudit au moins un premier groupement de données **111** et/ou dudit au moins un deuxième groupement de données **121.** Ainsi, une priorisation ou une hiérarchisation entre ledit au moins un premier circuit de radiocommunication **110** et par ledit au moins un deuxième circuit de radiocommunication **120** est réalisée ce qui évite que ledit au moins un premier circuit de radiocommunication **110** et ledit au moins un deuxième circuit de radiocommunication **120** ne répondent à la même interrogation en même temps par exemple.

Le mode de réalisation de la figure 3, quant à lui, présente ledit dispositif de radiocommunication **100** comprenant au moins un commutateur **142,** par exemple un transistor ou un ensemble de transistors, configuré pour commuter la réception dudit au moins un ensemble d'ondes électromagnétiques **131** entre ledit au moins un premier circuit de radiocommunication **110** et ledit au moins un deuxième circuit de radiocommunication **120.** Cela a pour effet de réaliser ladite sélection en commutant, et donc en activant par exemple, ladite réception dudit au moins un ensemble d'ondes électromagnétiques **131** entre ledit au moins un premier circuit de radiocommunication **110** et ledit au moins un deuxième circuit de radiocommunication **120** et ainsi une priorisation ou une hiérarchisation entre ledit au moins un premier circuit de radiocommunication **110** et ledit au moins un deuxième circuit de radiocommunication **120** est réalisée.

## Revendications

1. Dispositif de radiocommunication (100) comprenant une antenne (130) configurée pour capter au moins un ensemble d'ondes électromagnétiques (131) et/ou pour rayonner au moins un premier groupement de données (111) et/ou au moins un deuxième groupement de données (121), et au moins un :
- Premier circuit de radiocommunication (110) ; ledit au moins un premier circuit de radiocommunication (110) étant configuré pour recevoir ledit au moins un ensemble d'ondes électromagnétiques (131) et/ou pour émettre ledit au moins un premier groupement de données (111) ; et un
- Deuxième circuit de radiocommunication (120) ; ledit au moins un deuxième circuit de radiocommunication (120) étant configuré pour recevoir ledit au moins un ensemble d'ondes électromagnétiques (131) et/ou pour émettre ledit au moins un deuxième groupement de données (121) ;
Ladite antenne (130) étant configurée pour être connectée, de préférence directement, audit au moins un premier circuit de radiocommunication (110) et audit au moins un deuxième circuit de radiocommunication (120).

2. Dispositif de radiocommunication (100) selon la revendication 1, dans lequel ledit au moins un premier circuit de radiocommunication (110) est configuré pour émettre ledit au moins un premier groupement de données (111) selon au moins une première norme et ledit au moins un deuxième circuit de radiocommunication (120) est configuré pour émettre ledit au moins un deuxième groupement de données (121) selon au moins une deuxième norme, de préférence ladite au moins une première norme est différente de ladite au moins une deuxième norme.

3. Dispositif de radiocommunication (100) selon la revendication 2, dans lequel ladite au moins une première norme est identique à ladite au moins une deuxième norme.

4. Dispositif de radiocommunication (100) selon l'une quelconque des revendications précédentes, lequel comprenant au moins un dispositif de retardement (141) configuré pour retarder la réception dudit au moins un ensemble d'ondes électromagnétiques (131) par ledit au moins un premier circuit de radiocommunication (110) ou par ledit au moins un deuxième circuit de radiocommunication (120).

5. Dispositif de radiocommunication (100) selon l'une quelconque des revendications précédentes, lequel comprenant au moins un commutateur (142) configuré pour commuter la réception dudit au moins un ensemble d'ondes électromagnétiques (131) entre ledit au moins un premier circuit de radiocommunication (110) et ledit au moins un deuxième circuit de radiocommunication (120).

6. Dispositif de radiocommunication (100) selon l'une quelconque des revendications précédentes, dans lequel ladite antenne (130) est constituée d'une seule antenne (130).

7. Dispositif de radiocommunication (100) selon l'une quelconque des revendications précédentes, dans lequel ladite au moins une première norme est une norme RFID ou une norme NFC et/ou ladite au moins une deuxième norme est une norme RFID ou une norme NFC

8. Procédé de communication mise en œuvre par ledit dispositif de radiocommunication (100) selon l'une quelconque des revendications précédentes ; ledit procédé de communication comprenant :
- Réception dudit au moins un ensemble d'ondes électromagnétiques (131) ;
- Sélection dudit au moins un premier circuit de radiocommunication (110) et/ou dudit au moins un deuxième circuit de radiocommunication (120) ; et,
- Émission dudit au moins un premier groupement de données (111) et/ou dudit au moins un deuxième groupement de données (121).

9. Procédé de communication selon la revendication 8, dans lequel ladite sélection est réalisée par une reconnaissance de ladite au moins une première norme par ledit au moins un premier circuit de radiocommunication (110) et/ou de ladite au moins une deuxième norme par ledit au moins un deuxième circuit de radiocommunication (120).

10. Procédé de communication selon la revendication 8 ou 9, dans lequel ladite sélection est réalisée en retardant ladite réception dudit au moins un ensemble d'ondes électromagnétiques (131) par ledit au moins un premier circuit de radiocommunication (110) ou par ledit au moins un deuxième circuit de radiocommunication (120) et/ou en retardant ladite émission dudit au moins un premier groupement de données (111) et/ou dudit au moins un deuxième groupement de données (121).

11. Procédé de communication selon l'une quelconque des revendications précédentes, dans lequel ladite sélection est réalisée en commutant ladite réception dudit au moins un ensemble d'ondes électromagnétiques (131) entre ledit au moins un premier circuit de radiocommunication (110) et ledit au moins un deuxième circuit de radiocommunication (120).
